# EUROPEAN PATENT SPECIFICATION

(11) **EP 1 542 546 B1**
(45) Date of publication and mention of the grant of the patent: **18.11.2009**
(21) Application number: 03750945.2
(22) Date of filing: 24.09.2003
(51) Int. Cl.: A23L 1/105, A23L 1/03, A21D 8/04, A23L 1/217, B65D 77/30, B65D 81/34

(54) **REDUCTION OF ACRYLAMIDE FORMATION**
REDUZIERUNG VON ACRYLAMIDBILDUNG
REDUCTION DE LA FORMATION D'ACRYLAMIDE

(30) Priority: 24.09.2002 GB 0222185
(43) Date of publication of application: 22.06.2005
(60) Divisional application: 09007592.0
(73) Proprietor: Zeracryl AS, 1432 Aas (NO)
(72) Inventor: BAARDSETH, Pernille, c/oForinnova AS, N-5008 Bergen (NO); BLOM, Hans, N-5008 Bergen (NO); ENERSEN, Grethe, c/oForinnova AS, N-5008 Bergen (NO); SKREDE, Grete, c/oForinnova AS, N-5008 Bergen (NO); SLINDE, Erik, c/oForinnova AS, N-5008 Bergen (NO); SUNDT, Thea, c/oForinnova AS, N-5008 Bergen (NO); THOMASSEN, Trond, c/oForinnova AS, N-5008 Bergen (NO)
(74) Representative: Cockbain, Julian
(86) International application number: PCT/GB2003/004066
(87) International publication number: WO 2004/028278

(56) References cited:
- WO-A-01/78524
- DATABASE WPI Section Ch, Week 199815 Derwent Publications Ltd., London, GB; Class D11, AN 1998-162469 XP002268083 & JP 10 028516 A (KAO CORP) 3 February 1998 (1998-02-03)
- DATABASE WPI Section Ch, Week 199712 Derwent Publications Ltd., London, GB; Class D13, AN 1997-126328 XP002268084 & JP 09 009862 A (AJINOMOTO KK) 14 January 1997 (1997-01-14)
- "Brief Communications, ACRYLAMIDE IS FORMED IN THE MAILLARD REACTION" NATURE, MACMILLAN JOURNALS LTD. LONDON, GB, vol. 419, 3 October 2002 (2002-10-03), pages 448-449, XP002235161 ISSN: 0028-0836
- TAREKE E ET AL: "analysis of acrylamide, a carcinogen formed in heated foddstuffs" JOURNAL OF AGRICULTURAL AND FOOD CHEMISTRY, AMERICAN CHEMICAL SOCIETY. WASHINGTON, US, vol. 50, 17 July 2002 (2002-07-17), pages 4998-5006, XP002237517 ISSN: 0021-8561 cited in the application
- DATABASE WPI Section Ch, Week 197740 Derwent Publications Ltd., London, GB; Class A14, AN 1977-71839Y XP002268085 & JP 52 102489 A (TAKI CHEMICAL KK) 27 August 1977 (1977-08-27)
- DATABASE WPI Section Ch, Week 197835 Derwent Publications Ltd., London, GB; Class A35, AN 1978-62780A XP002268093 & JP 53 086079 A (TAKI KAGAKU KK) 29 July 1978 (1978-07-29)

## Description

The present invention relates to improvements in and relating to French fries.

In a publication by the Swedish National Food Administration (see www.slv.se/engdefault.asp) it was reported that many cooked foods, in particular fried, grilled or baked foods, had surprisingly been found to contain high levels of the toxic contaminant acrylamide. No suggestion was made as to how the acrylamide context of such foods could be reduced.

A further report of acrylamide production in food cooking occurred in Tareke et al., J. Agric. Food Chem 50: 4998-5006 (2002).

Various methods for the treatment of food products with enzymes are discussed in JP-A-10028516, JP-A-09009862 and WO 01/78524.

We have now surprisingly found that the acrylamide content of French fries can be reduced by treatment of the French fries prior to cooking with lactic acid generating microorganisms and/or with acid.

Thus viewed from one aspect the invention provides the use of a lactic acid producing microorganism for the treatment of uncooked French fries or flour for use in the preparation of uncooked French fries to reduce acrylamide production in subsequent cooking thereof.

Lactic acid producing microorganisms are well know and examples include lactic acid bacteria such as Bifidobacterium sp., Brevibacterium sp., Lactobacillus sp., Lactococcus sp., Leuconostoc sp., Micrococcus sp., Oenococcus sp., Pediococcus sp., and Streptococcus sp. Lactobacilli are especially preferred for use according to the invention, in particular Lactobacillus plantarum strains NCDO 1752 and NCDO 1193 (available from the National Collection of Food Bacteria) and Lactobacillus NCIMB 40450. Other strains of lactobacillus which generate lactic acid and are safe for use in foodstuff treatment have been described widely in the scientific literature.

The treatment with a lactic acid producing microorganism according to the invention preferably involves incubation in an aqueous medium for up to 7 days, e.g. 30 minutes to 24 hours, especially 1 to 6 hours. Incubation is preferably at 4 to 45°C, e.g. 25 to 35°C, i.e. as is conventional for such microorganisms.

Typically such treatment may involve homofermentative lactic acid bacteria incubation in an aqueous medium.

Following treatment with the lactic acid producing microorganism, the uncoooked French fries may be cooked using cooking techniques that expose the product to temperatures above 150°C, e.g. by baking, grilling, roasting or frying.

Before such high temperature cooking, it is desirable to rinse the treated uncooked product with water.

The cooking may be a single stage operation. However it may instead be one stage of a multi stage (e.g. two stage) cooking procedure. Thus the technique of the invention is especially applicable to French fries which are treated according to the invention, partially cooked, transported and/or stored, then cooked again.

Where appropriate, the products produced according to the invention may be further processed, e.g. by drying, freezing, sealing into moisture proof containers etc. Such processing steps, which are often conventional for French fries, form further optional steps in the processes of the invention.

The invention is especially applicable for the production of so-called oven-ready french-fried potatoes which are provided to the consumer in part-cooked form for baking prior to serving, as well as to the production of chopped ready-to-fry potatoes (e.g. of the type produced for deep frying in restaurants).

Thus viewed from a further aspect the invention provides a process for the preparation of ready to cook (e.g. oven-ready or ready to fry) french fried potatoes which process comprises chopping potatoes, fermenting the chopped potatoes with a lactic acid producing microorganism, frying the fermented chopped potatoes, and optionally loading the fried fermented chopped potatoes in a container, and optionally sealing the container.

The chopping stage in this process is preferably such as to produce batons having a cross-sectional area of 10 to 100mm², especially preferably 25 to 80mm².

The container used in these processes will typically be a plastic bag, paper carton or bag or other container conventionally used for storage and transport of ready to cook french fries.

French-fries are preferably made from sliced potato; however they may also be made from extruded or moulded carbohydrate-containing pastes produced using powdered or granulated potato and/or cereal (e.g. rice).

Thus in alternative aspects of the invention the uncooked French fries may be produced from potato and/or cereal flour fermented with a lactic acid producing microorganism as described herein before being moulded or extruded in paste form into French-fry shapes and then cooked. If desired, the fermentation may be effected on French fry shapes moulded or extruded using a potato and/or cereal flour based paste.

The potatoes treated according to the invention are preferably of a variety selected from Maris Piper, Beate or Russet, especially Maris Piper. Saturna, King Edward, Russet Burbank, Bintje, Shepady and Shasta may also be used. Especially preferably the potatoes are selected from varieties having a reducing sugar content of less than 1.5% wt, particularly less than 1.0% wt.

Besides the fermentation according to the invention, the French fries of the invention may be prepared by conventional methods, optionally involving rinsing and/or drying after the treatment. Thus such French fries may optionally contain further components, such as conventional foodstuff components or additives, e.g. salt, sugars, flavours, stabilizers, buffers, etc.

The invention will now be illustrated further with reference to the following Example.

### Example 1

### French fries

### Ingredients

Potatoes of the variety Beate were obtained from Department of Horticulture and Crop Sciences, Agricultural University of Norway, As. The potatoes were stored at 8°C from harvest until three weeks prior to processing when storage temperature was reduced to 4°C.

Palm oil was obtained from Denofa AS, Frederikstad, Norway. The oil had maximum 0.05% free fatty acids, an iodine number of 60, a peroxide value of 0.5 mekv/kg and an anisidin number of 5.0. Fatty acid composition was: 12% linoleic acid, 42% oleic acid and 45% saturated fatty acids.

The Lactobacillus strain NCIMB 40450 was used. Bacteria cells were grown and harvested in the logarithmic growth phase by centrifugation and resuspended in 1% salt brine.

The soaking solution used was:
- Brine for fermentation:: 1% NaCl with the addition of bacteria until 1x 10⁶ cells/ml

### Pre-treatment of potatoes

Potatoes (var. Beate) were peeled and cut with a knife into 6 x 6-mm sticks. The sticks (200g) were immediately added to 400 mL of brine. Fermentation was allowed to proceed in an incubator at 30°C for 5 hrs. Control samples were rinsed in water and deep-fried without delay.

### Deep frying

The potatoes were dried with paper towels and deep-fried as 150-g portions in palm oil at 170°C in a Nuovo Elframo, Model EB (Bergamo, Italy) fryer for 8 min.

### Analyses

Dry matter was determined in a vacuum oven at 70°C overnight. pH of brines was determined using a pH-meter. Soluble solids of potatoes were determined as °Brix using a Metler Toledo RE40 refractometer. Samples were homogenised and a few drops of the homogenates were applied on the refractometer. °Brix is given as g sucrose/100g sample.

Accredited analyses of acrylamide were carried out at Steins Laboratorium, Denmark.

### Results

The °Brix-value of the potatoes (var. Beate) was 6.8.

Results from the analyses of deep-fried products are shown in Table 1 below.

**Table 1**

| | Dry matter | | | Acrylamide | |
|---|---|---|---|---|---|
| Pre-treatment | pH in brine after pre-treatment | g/100g fried product | µg/kg dry matter | µg/kg product | % reduction (product) |
| -control | 6.7* | 86.0 | 744 | 640 | 0 |
| -fermented | 4.3 | 85.3 | 469 | 400 | 38 |

| | | | | | |
|---|---|---|---|---|---|
| * tap water | | | | | |

The samples within each of the product groups were deep-fried for the same period of time, rather than being deep-fried until a certain product colour. Any difference in acrylamide levels thus reflects the ability of the treatment to prevent the formation of acrylamide, regardless of the colour that might be formed during deepfat-frying.

## Claims

1. The use of a lactic acid producing microorganism for the treatment of uncooked French fries or flour for use in the preparation of uncooked French fries to reduce acrylamide production in subsequent cooking thereof.

2. Use as claimed in claim 1 of a lactic acid bacterium.

3. A process for the preparation of ready to cook French fried potatoes which process comprises chopping potatoes, fermenting the chopped potatoes with a lactic acid producing microorganism, frying the fermented chopped potatoes, and optionally loading the fried fermented chopped potatoes into a container.

4. A process as claimed in claim 3 wherein said microorganism is a lactic acid bacterium.

5. French fries obtainable by a process as claimed in claim 3 or claim 4 or by way of a use as claimed in claim 1 or claim 2.

## Patentansprüche

1. Verwendung eines milchsäurebildenden Mikroorganismus zur Behandlung ungegarter bzw. -frittierter Pommes frites oder von Mehl zur Verwendung bei der Herstellung ungegarter Pommes frites zur Reduktion einer Acrylamidbildung bei dem nachfolgenden Garen derselben.

2. Verwendung nach Anspruch 1 eines Milchsäurebakteriums.

3. Verfahren zur Herstellung von garfertigen Pommesfrites-Kartoffeln bzw. frittierten Kartoffeln, das das Kleinschneiden von Kartoffeln, das fermentieren der klein geschnittenen Kartoffeln mit einem milchsäurebildenden Mikroorganismus, das Frittieren der Fermentierten, klein geschnittenen Kartoffeln und optional das Laden bzw. Füllen der frittierten, fermentierten, klein geschnittenen Kartoffeln in einen Behälter beinhaltet.

4. Verfahren nach Anspruch 3, wobei der Mikroorganismus ein Milchsäurebakterium ist.

5. Pommes frites, die durch ein Verfahren nach Anspruch 3 oder 4 oder durch eine Verwendung nach Anspruch 1 oder 2 erhalten werden können.

## Revendications

1. Utilisation d'un micro-organisme produisant de l'acide lactique pour le traitement de frites non cuites ou de farine à utiliser dans la préparation de frites non cuites afin de réduire la production d'acrylamide lors de la cuisson ultérieure ou suivante de celles-ci.

2. Utilisation selon la revendication 1, d'une bactérie d'acide lactique.

3. Procédé pour la préparation de pommes de terre frites prêtes à cuire, lequel procédé comporte les étapes consistant à hacher les pommes de terre, fermenter les pommes de terre hachées à l'aide d'un micro-organisme produisant de l'acide lactique, frire les pommes de terre hachées fermentées et, de manière facultative, charger les pommes de terre hachées fermentées frits dans un conteneur.

4. Procédé selon la revendication 3, dans lequel ledit micro-organisme est une bactérie d'acide lactique.

5. Frites pouvant être obtenues par l'intermédiaire d'un procédé tel que revendiqué dans la revendication 3 ou la revendication 4 ou par l'intermédiaire d'une utilisation telle que revendiquée dans la revendication 1 ou la revendication 2.
